# EUROPEAN PATENT APPLICATION

(11) **EP 4 670 967 A1**
(43) Date of publication of application: **31.12.2025**
(21) Application number: 24774019.4
(22) Date of filing: 15.03.2024
(51) Int. Cl.: B32B 17/00, B32B 17/10, B32B 27/30, B32B 27/36, B32B 27/40, B32B 27/28, B60J 1/02, C03C 27/12, C03C 17/34

(54) **LAMINATED HEAT-INSULATING GLASS HAVING LOCAL HIGH-INFRARED RAY TRANSMISSION, AND VEHICLE COMPRISING SAME**

(30) Priority: 17.03.2023 CN 202310262567
(71) Applicant: Fujian Wanda Automobile Glass Industry Co., Ltd., Fuqing Fuzhou, Fujian 350300 (CN)
(72) Inventor: LU, Yuemin, Fuzhou, Fujian 350300 (CN); ZHANG, Canzhong, Fuzhou, Fujian 350300 (CN); LIN, Jun, Fuzhou, Fujian 350300 (CN); HE, Weilong, Fuzhou, Fujian 350300 (CN)
(74) Representative: Patentanwälte Olbricht Buchhold Keulertz
(86) International application number: PCT/CN2024/081861
(87) International publication number: WO 2024/193454

(57) **Abstract**

Disclosed are laminated heat-insulating glass having local high-infrared ray transmission, and a vehicle comprising same. The laminated heat-insulating glass comprises: an outer glass sheet, an inner glass sheet, and a thermoplastic middle layer; the outer glass sheet has a first surface and a second surface, and the inner glass sheet has a third surface and a fourth surface; the thermoplastic middle layer is sandwiched between the second surface and the third surface; the laminated heat-insulating glass further comprises an infrared transmission enhancement layer and a heat insulating layer, which are not located on the same glass surface; and the heat-insulating layer has a film-removed area therein. The present invention satisfies the LIDAR or infrared camera use requirement of signal attenuation not exceeding 3dB when passing through the laminated heat-insulating glass, and increases the use accuracy of the LIDAR or infrared camera while simultaneously significantly reducing air conditioner power consumption and improving the comfort of the driver and passengers.

## Description

The present application claims priority to Chinese Patent Application No. 202310262567.5, entitled "Laminated thermal-insulation glass with high localized infrared transmittance and vehicle comprising the same" filed before CNIPA on March 17, 2023, the entire contents of which are incorporated herein by reference.

### Technical field

The present invention relates to the field of glass, in particular to a laminated thermal-insulation glass with high localized infrared transmittance and a vehicle comprising the same.

### Background art

Typically, an automobile front windshield is a laminated glass that comprises an outer glass pane, a thermoplastic intermediate layer, and an inner glass pane, and when a multifunctional camera or LIDAR is mounted on an inner surface of the inner glass pane, the signal data from the multifunctional camera or LIDAR needs to pass through the outer glass pane, the thermoplastic intermediate layer and the inner glass pane for transmission and/or reception. Since the glass itself and the thermoplastic intermediate layer (such as PVB) can absorb infrared rays, for a 905 nm LIDAR, a 1550 nm LIDAR and a 850-1400 nm infrared camera, the traditional laminated glass may hinder the transmission of signal data from the LIDAR and the infrared camera, thereby affecting the normal operation of the LIDAR and the infrared camera, and accordingly, the actual adaptation effect is not ideal. In addition, in order to improve the safety and comfort when driving an automobile, more and more automobile glass has an electric heating function or a thermal-insulation function, and these functions may be implemented by depositing a metal film layer or a transparent conductive oxide film layer on the surface of the automobile glass. The metal film layer or the transparent conductive oxide film layer has the characteristic of reflecting infrared rays, such that the automobile glass with the electric heating function or the thermal-insulation function has greater resistance to signal data transmission from the LIDAR and the infrared camera.

CN 101678651 A discloses a laminated vehicle window pane, suitable for use with an optical sensor, such as a LIDAR-type sensor. The laminated vehicle window pane comprises a first window pane material layer and a second window pane material layer joined together by an interlaminated material layer therebetween. The first window pane material layer is a bulk-colored glass pane having a transmittance of at least 30% in the wavelength range of 400-2100 nm and a transmittance of at least 32% in the wavelength range of 750-1300 nm. Such transmittances still do not have practical use value for LIDARs or infrared cameras. CN 101037099 A discloses an apparatus and a method for mounting an infrared camera with an outward viewing angle in a vehicle by mounting a plastic insert having an infrared-ray transparent portion into a through-hole of a windshield. According to the technical solution, the integrity of the outer surface of the front windshield is damaged, the safety may be reduced to a certain extent, and the technical problems of large lamination difference, great difficulty in vacuumizing and the like is present in actual production of the laminated glass with the through-hole.

### Summary of the invention

In order to solve the drawbacks such as the unsatisfactory practical adaptation of traditional laminated glass to LIDAR or infrared cameras, the present invention provides a laminated thermal-insulation glass with high localized infrared transmittance and a vehicle comprising the same.

The following technical solutions are used in the present invention to achieve the above object.

In one aspect, the present invention provides a laminated thermal-insulation glass with high localized infrared transmittance, comprising an outer glass pane, an inner glass pane, and a thermoplastic intermediate layer; wherein the outer glass pane has a first surface and a second surface, and the inner glass pane has a third surface and a fourth surface; the thermoplastic intermediate layer is sandwiched between the second surface and the third surface;
the laminated thermal-insulation glass further comprises an infrared anti-reflective layer and a thermal-insulation layer which are not positioned on the same glass surface;
the orthographic projection of the infrared anti-reflective layer on the first surface and the orthographic projection of the thermal-insulation layer on the first surface have an overlapping region, a film-free region is provided in the thermal-insulation layer, and the orthographic projection of the infrared anti-reflective layer on the thermal-insulation layer covers the film-free region.

In the laminated thermal-insulation glass of the present invention, the infrared anti-reflective layer and the thermal-insulation layer are not positioned on the same glass surface. Whole-surface coating can be carried out on different glass surfaces respectively, resulting in good overall appearance consistency. Local film removal is necessary only in the thermal-insulation layer, and the film-free region corresponds to the signal transmission area of the LIDAR or the infrared camera. No film removal is necessary in the infrared anti-reflective layer, resulting in a simple and easy process.

According to the laminated thermal-insulation glass of the present invention, preferably, the orthographic projection of the infrared anti-reflective layer on the first surface occupies 70% or more of the area of the first surface; the orthographic projection of the thermal-insulation layer on the first surface occupies 70% or more of the area of the first surface; and the overlapping region occupies 80% or more of the orthographic projection of the thermal-insulation layer on the first surface, that is, the area occupied by the film-free region in the thermal-insulation layer is less than 20%, and the film-free region of the thermal-insulation layer is only covered with the infrared anti-reflective layer.

According to the laminated thermal-insulation glass of the present invention, preferably, the infrared anti-reflective layer comprises a first high-refractive index layer, a first low-refractive index layer, a second high-refractive index layer and a second low-refractive index layer which are sequentially laminated from the glass surface; the physical thickness of the first high-refractive index layer is greater than the physical thickness of the first low-refractive index layer, and the physical thickness of the second high-refractive index layer is greater than the physical thickness of the second low-refractive index layer.

According to the laminated thermal-insulation glass of the present invention, preferably, the first high-refractive index layer has a refractive index of 1.8-2.7, and a physical thickness of 110 nm-160 nm; the first low-refractive index layer has a refractive index of 1.3-1.7, and a physical thickness of 5 nm-50 nm; the second high-refractive index layer has a refractive index of 1.8-2.7, and a physical thickness of 100 nm-160 nm; and the second low-refractive index layer has a refractive index of 1.3-1.7, and a physical thickness of 55 nm-110 nm.

According to the laminated thermal-insulation glass of the present invention, preferably, the difference between the physical thickness of the first high-refractive index layer and the physical thickness of the first low-refractive index layer is greater than or equal to 50 nm, and the difference between the physical thickness of the second high-refractive index layer and the physical thickness of the second low-refractive index layer is greater than or equal to 30 nm.

According to the laminated thermal-insulation glass of the present invention, preferably, the difference between the physical thickness of the first high-refractive index layer and the physical thickness of the first low-refractive index layer is greater than or equal to 100 nm, and the difference between the physical thickness of the second high-refractive index layer and the physical thickness of the second low-refractive index layer is greater than or equal to 40 nm.

According to the laminated thermal-insulation glass of the present invention, preferably, each of the first high-refractive index layer and the second high-refractive index layer comprise a material selected from oxides, nitrides or oxynitrides of at least one element of Zn, Sn, Ti, Nb, Zr, Ni, In, Al, Ce, W, Mo, Sb, Bi, Si, Hf, Ta, Y, Ce and La; and each of the first low-refractive index layer and the second low-refractive index layer comprise a material selected from oxides, oxynitrides or fluorides of at least one element of Si, Al, Mg, Ce, La, Y and Ba.

According to the laminated thermal-insulation glass of the present invention, preferably, the thermal-insulation layer comprises at least two metallic silver layers, silver alloy layers or transparent conductive oxide layers; the silver alloy layer comprises at least one material selected from the group consisting of silver-copper alloy, silver-aluminum alloy, silver-indium alloy, silver-gold alloy, silver-platinum alloy, silver-nickel alloy, silver-chromium alloy, silver-tin alloy, silver-titanium alloy, silver-zirconium alloy, silver-molybdenum alloy, silver-tungsten alloy, silver-manganese alloy and silver-magnesium alloy; and the transparent conductive oxide layers comprises at least one material selected from the group consisting of tin-doped indium oxide, fluorine-doped tin oxide, antimony-doped tin oxide, aluminum-doped zinc oxide, indium-doped zinc oxide and gallium-doped zinc oxide.

According to the laminated thermal-insulation glass of the present invention, preferably, the outer glass pane and/or the inner glass pane is an ultra-transparent glass having a total iron content of less than or equal to 0.015% by mass, and a visible light transmittance of greater than or equal to 91%.

According to the laminated thermal-insulation glass of the present invention, preferably, the ultra-transparent glass provided with the infrared anti-reflective layer has a monolithic visible light transmittance (TL10) of greater than or equal to 90%, and a first near-infrared transmittance (Tp1) of greater than or equal to 85% to P-polarized light with a wavelength of 905 nm incident at an incident angle of 50°-73°.

According to the laminated thermal-insulation glass of the present invention, preferably, the ultra-transparent glass provided with the infrared anti-reflective layer has a first near-infrared transmittance (Tp1) to P-polarized light with a wavelength of 905 nm incident at an incident angle of 55°-70° greater than the monolithic visible light transmittance (TL10) thereof.

According to the laminated thermal-insulation glass of the present invention, preferably, the first near-infrared transmittance (Tp1) to P-polarized light with a wavelength of 905 nm incident at an incident angle of 50°-73° of the ultra-transparent glass provided with the infrared anti-reflective layer has a maximum value (Tp1max) and a minimum value (Tp1min), and the difference between the maximum value (Tp1max) and the minimum value (Tp1min) is less than 10%.

According to the laminated thermal-insulation glass of the present invention, preferably, the laminated thermal-insulation glass has a first visible light transmittance (TL1) of greater than or equal to 85%, a second visible light transmittance (TL2) of greater than or equal to 70%, and a fourth surface visible light reflectance (RL4) of less than or equal to 10%.

According to the laminated thermal-insulation glass of the present invention, preferably, the laminated thermal-insulation glass has a total solar transmittance (Tts) of less than or equal to 50%.

According to the laminated thermal-insulation glass of the present invention, preferably, the laminated thermal-insulation glass has a second near-infrared transmittance (Tp2) of greater than or equal to 80% to P-polarized light with a wavelength of 905 nm incident at an incident angle of 50°-73°. The laminated thermal-insulation glass has a second near-infrared transmittance (Tp2) of greater than or equal to 90% to P-polarized light with a wavelength of 905 nm incident at an incident angle of 55°-65°.

According to the laminated thermal-insulation glass of the present invention, preferably, the first surface reflection color Lab of the laminated thermal-insulation glass has an *a* value of -5 to 2 and a b value of -12 to 0.

Another aspect of the present invention provides a vehicle, comprising a sensor and the laminated thermal-insulation glass, wherein the sensor is mounted inside the vehicle, and a detection signal having a wavelength of 905 nm emitted and/or received by the sensor passes through the film-free region. Exemplarily, the laminated thermal-insulation glass may be used as a front windshield or the like.

According to the vehicle of the present disclosure, preferably, the detection signal is incident on the film-free region at an incident angle of 50°-73°, and the detection signal comprises at least 80% of P-polarized light.

The laminated thermal-insulation glass according to the present invention may enable the automobile glass to meet the communication requirements of a high-sensitivity communication sensor such as a LIDAR or an infrared camera, and also meet the thermal-insulation requirements, such that the total solar transmittance of the laminated thermal-insulation glass does not exceed 50%. The visible light reflectivity of the fourth surface is low, such that the influence of glare in the automobile on the driver is further reduced, when the glass is used as an automobile glass. Meanwhile, the use requirement that the attenuation of the signal of the LIDAR or the infrared camera through the laminated thermal-insulation glass is not higher than 3dB is met, which ensures the normal work of the LIDAR or the infrared camera. While the use accuracy of the LIDAR or the infrared camera is improved, the energy consumption of the air conditioner can be obviously reduced, and the comfort of drivers and passengers can be improved. In addition, the laminated thermal-insulation glass is formed by adopting a whole-surface coating process and a localized film removing process in the thermal-insulation layer, which is simple, and good in the overall appearance consistency of the film layer.

### Brief Description of the Drawings

FIG. 1 is a schematic diagram of a layer structure of a laminated thermal-insulation glass with high localized infrared transmittance according to one embodiment of the present invention.
FIG. 2 is a schematic top view of a laminated thermal-insulation glass with high localized infrared transmittance according to the present invention.
FIG. 3 is a schematic diagram of a layer structure of a laminated thermal-insulation glass with high localized infrared transmittance according to another embodiment of the present invention.
FIG. 4 is a schematic diagram of a layer structure of a laminated thermal-insulation glass with high localized infrared transmittance according to still another embodiment of the present invention.

**Description of numerical references:**

| | | | |
|---|---|---|---|
| 1: | outer glass pane; | 2: | inner glass pane; |
| 3: | thermoplastic intermediate layer; | 11: | first surface; |
| 12: | second surface; | 21: | third surface; |
| 22: | fourth surface; | 4: | thermal-insulation layer; |
| 41: | film-free region; | 5: | infrared anti-reflective layer; |
| 100: | laminated thermal-insulation glass; | | |
| 101: | an area covered with both the thermal-insulation layer and the infrared anti-reflective layer in the laminated thermal-insulation glass; | | |
| 102: | an area covered with only the infrared anti-reflective layer in the laminated thermal-insulation glass. | | |

### Detailed description of embodiments

In order to illustrate the present invention more clearly, the present invention is further described below with reference to preferred embodiments. It should be understood by those skilled in the art that the following specific descriptions are illustrative rather than restrictive and should not be used to limit the protection scope of the present invention.

According to the laminated thermal-insulation glass provided by the present invention, an infrared anti-reflective layer and a thermal-insulation layer are formed by a whole-surface coating on different surfaces of a glass substrate, and a film-free region is formed by localized film removal in the thermal-insulation layer, which is for correspondingly installing a high-sensitivity communication sensor such as a LIDAR or an infrared camera. It has the advantages of simple process and good overall appearance consistency of the film layer. In addition, in the laminated structure of the high-refractive index layer/the low-refractive index layer of the infrared anti-reflective layer of the present invention, the thickness of the high-refractive index layer is greater than the thickness of the low-refractive index layer, thereby ensuring the accuracy and efficiency of large field-of-view detection of the sensor.

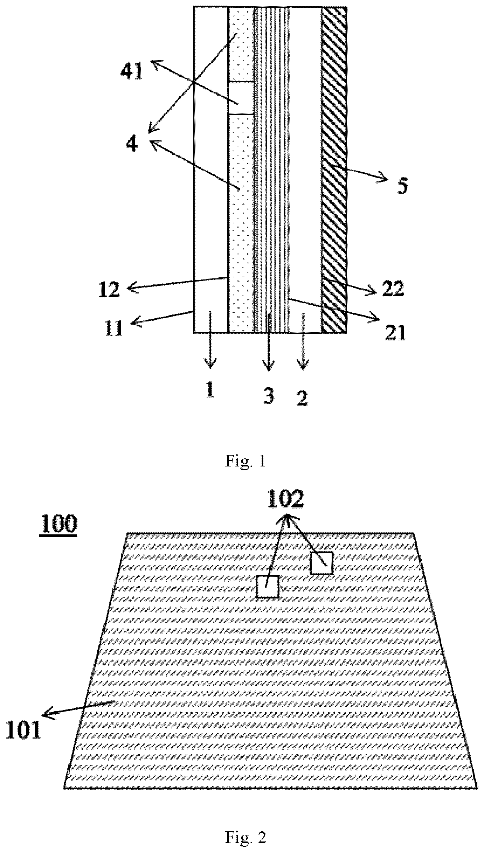

As shown in FIGS. 1-4, the laminated thermal-insulation glass of the present invention comprises an outer glass pane 1, an inner glass pane 2 and a thermoplastic intermediate layer 3. The outer glass pane 1 has a first surface 11 and a second surface 12, and the inner glass pane 2 has a third surface 21 and a fourth surface 22. The thermoplastic intermediate layer 3 is sandwiched between the second surface 12 and the third surface 21.

The laminated thermal-insulation glass further comprises an infrared anti-reflective layer 5 and a thermal-insulation layer 4, which are not on the same glass surface. The orthographic projection of the infrared anti-reflective layer 5 on the first surface 12 and the orthographic projection of the thermal-insulation layer 4 on the first surface 12 have an overlapping region. The thermal-insulation layer 4 is provided with a film-free region 41, and the orthographic projection of the infrared anti-reflective layer 5 on the thermal-insulation layer 4 covers the film-free region 41. Specifically, the infrared anti-reflective layer 5 may be disposed on the second surface 12, or may be disposed on the third surface 21, or may be disposed on the fourth surface 22. Specifically, the thermal-insulation layer 4 may be disposed on the second surface 12, or may be disposed on the third surface 21, or may be disposed between the second surface 12 and the third surface 21.

As shown in FIG. 1, in a specific embodiment, the laminated thermal-insulation glass comprises an outer glass pane 1, an inner glass pane 2 and a thermoplastic intermediate layer 3. The outer glass pane 1 has a first surface 11 and a second surface 12, and the inner glass pane 2 has a third surface 21 and a fourth surface 22. The thermoplastic intermediate layer 3 is sandwiched between the second surface 12 and the third surface 21.

An infrared anti-reflective layer 5 is disposed on the fourth surface 22. A thermal-insulation layer 4 is disposed on the second surface 12, and a film-free region 41 is disposed in the thermal-insulation layer 4.

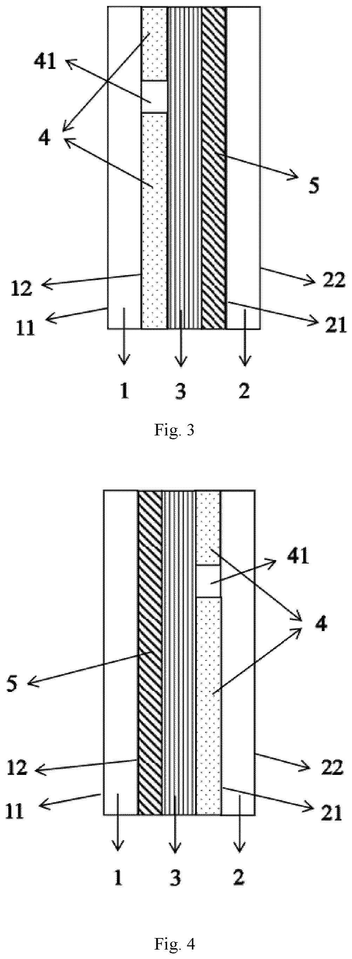

As shown in FIG. 3, in a specific embodiment that differs from FIG. 1, the infrared anti-reflective layer 5 is disposed on the third surface 21, and the thermal-insulation layer 4 is disposed on the second surface 12.

As shown in FIG. 4, in a specific embodiment that differs from FIG. 1, the infrared anti-reflective layer 5 is disposed on the second surface 12, and the thermal-insulation layer 4 is disposed on the third surface 21.

In the laminated thermal-insulation glass of FIGS. 1, 3 and 4, the infrared anti-reflective layer 5 and the thermal-insulation layer 4 are respectively disposed on different glass surfaces by a whole-surface coating on the different glass surfaces. The film-free region 41 is formed by a localized film removal in the thermal-insulation layer 4. In addition, the thermal-insulation layer 4 may also be disposed between the second surface 12 and the third surface 21, and specifically, the thermal-insulation layer 4 may be formed by coating a film on the surface of an organic resin film sheet, and the film-free region 41 is formed with local covering during the coating process, or the film-free region 41 is formed by localized film removal after the whole-surface coating. Then, the organic resin film provided with the thermal-insulation layer 4 is laminated between the second surface 12 and the third surface 21. Specifically, it may be located between the second surface 12 and the thermoplastic intermediate layer 3, or may be located between the thermoplastic intermediate layer 3 and the third surface 21, or may be located in the thermoplastic intermediate layer 3. For example, the thermoplastic intermediate layer 3 comprises two pieces of transparent PVB, and the organic resin film provided with the thermal-insulation layer 4 is sandwiched between the two pieces of transparent PVB. The organic resin film may be, for example, polyethylene terephthalate (PET), polymethyl methacrylate (PMMA), polycarbonate (PC), polyethylene naphthalate (PEN), and cellulose acetate (CA).

As shown in FIG. 2, in the laminated thermal-insulation glass 100, the film-free region 41 of the thermal-insulation layer 4 at least covers the region 102, that is, the region 102 is a region of the laminated thermal-insulation glass 100 only covered with the infrared anti-reflective layer 5. A detection signal of a highly sensitive communication sensor such as a LIDAR or an infrared camera passes through the region 102, and the infrared anti-reflective layer 5 can improve the transmittance of the region 102 through which the detection signal passes. In addition, since there is no thermal-insulation layer 4 in the film-free region 41, the transmittance of the detection signal passing through the region 102 is not interfered by the thermal-insulation layer 4, thereby achieving normal operation of the sensor with higher precision and efficiency.

As shown in FIG. 2, in the laminated thermal-insulation glass 100, an overlapping area of the laminated thermal-insulation glass 100 covers an area 101, that is, the area 101 is an area of the laminated thermal-insulation glass 100 covered with both the heat insulating layer 4 and the infrared anti-reflective layer 5. The driver and passengers in the vehicle observe the environment outside the vehicle through the area 101, and the thermal-insulation layer 4 can greatly reduce the total solar transmittance to 50% or less, thereby improving the thermal comfort in the vehicle. Meanwhile, the infrared anti-reflective layer 5 can further reduce the visible light reflectivity of the fourth surface of the region 101 and improve the reflection color of the first surface of the region 101, such that a thermal-insulation layer 4 with better performances can be used for the laminated thermal-insulation glass 100.

In the laminated thermal-insulation glass 100 of the present invention, the infrared anti-reflective layer 5 and the thermal-insulation layer 4 are not on the same glass surface, and may be subjected to a whole-surface coating on different glass surfaces or organic resin films respectively, such that the overall appearance consistency is good. Only localized film removal is necessary in the thermal-insulation layer. The film-free region corresponds to the signal transmission region of the LIDAR or the infrared camera, and the infrared anti-reflective layer does not need film removal. The process is simple with low difficulty.

Preferably, the orthographic projection of the infrared anti-reflective layer 5 on the first surface occupies 70% or more of the area of the first surface, and the orthographic projection of the thermal-insulation layer 4 on the first surface occupies 70% or more of the area of the first surface. The overlapping region occupies at least 80% or more of the orthographic projection of the thermal-insulation layer 4 on the first surface. As shown in FIG. 2, that is, the area occupied by the film-free region 41 in the thermal-insulation layer 4 is less than 20%, and the film-free region 41 of the thermal-insulation layer is only covered with the infrared anti-reflective layer 5.

The infrared anti-reflective layer 5 comprises a first high-refractive index layer, a first low-refractive index layer, a second high-refractive index layer and a second low-refractive index layer which are sequentially laminated from the surface of the glass. The physical thickness of the first high-refractive index layer is greater than the physical thickness of the first low-refractive index layer, and the physical thickness of the second high-refractive index layer is greater than the physical thickness of the second low-refractive index layer. By designing a four-layer structure of the infrared anti-reflective layer 5, the present invention is able to not only improve the transmittance of the detection signal passing through the region 102, but also further reduce the visible light reflectivity on the fourth surface of the region 101 and improve the reflective color on the first surface of the region 101, so as to achieve a better match with the use of the thermal-insulation layer 4.

The first high-refractive index layer has a refractive index of 1.8-2.7, and a physical thickness of 110 nm-160 nm, such as 110 nm, 120 nm, 130 nm, 140 nm, 150 nm, 160 nm, or the like, more preferably 120 nm-150 nm. Preferably, the first low-refractive index layer has a refractive index of 1.3-1.7, and a physical thickness of 5 nm-50 nm, such as 5 nm, 10 nm, 15 nm, 20 nm, 25 nm, 30 nm, 35 nm, 40 nm, 45 nm, 50 nm, or the like, more preferably 15 nm-35 nm. Preferably, the second high-refractive index layer has a refractive index of 1.8-2.7, and a physical thickness of 100 nm-160 nm, such as 100 nm, 110 nm, 120 nm, 130 nm, 140 nm, 150 nm, 160 nm, or the like, more preferably 100 nm-140 nm. Preferably, the second low-refractive index layer has a refractive index of 1.3-1.7, and a physical thickness of 55 nm-110 nm, such as 55 nm, 60 nm, 65 nm, 70 nm, 75 nm, 80 nm, 85 nm, 90 nm, 95 nm, 100 nm, 110 nm, or the like, more preferably 60 nm-90 nm. The refractive index refers to a refractive index at a wavelength of 550 nm.

The difference between the physical thickness of the first high-refractive index layer and the physical thickness of the first low-refractive index layer is greater than or equal to 50 nm, that is, (the physical thickness of the first high-refractive index layer) - (the physical thickness of the first low-refractive index layer) is ≥ 50 nm, preferably ≥ 80 nm, more preferably ≥ 100 nm. The difference between the physical thickness of the second high-refractive index layer and the physical thickness of the second low-refractive index layer is greater than or equal to 30 nm, that is, (the physical thickness of the second high-refractive index layer) - (the physical thickness of the second low-refractive index layer) is ≥ 30 nm, preferably ≥ 40 nm, more preferably ≥ 45 nm.

Specifically, the first high-refractive index layer and the second high-refractive index layer comprise a material selected from oxides, nitrides or oxynitrides of at least one element selected from Zn, Sn, Ti, Nb, Zr, Ni, In, Al, Ce, W, Mo, Sb, Bi, Si, Hf, Ta, Y, Ce and La. The first low-refractive index layer and the second low-refractive index layer comprise a material selected from oxides, oxynitrides or fluorides of at least one element selected from Si, Al, Mg, Ce, La, Y and Ba.

In the present invention, the thermal-insulation layer 4 comprises at least two metallic silver layers, silver alloy layers or transparent conductive oxide layers having good infrared reflection properties, thereby reducing the total solar transmittance of the laminated thermal-insulation glass. The silver alloy layers comprises at least one material selected from the group consisting of silver-copper alloy, silver-aluminum alloy, silver-indium alloy, silver-gold alloy, silver-platinum alloy, silver-nickel alloy, silver-chromium alloy, silver-tin alloy, silver-titanium alloy, silver-zirconium alloy, silver-molybdenum alloy, silver-tungsten alloy, silver-manganese alloy and silver-magnesium alloy; and the silver content in the silver alloy layers is preferably greater than or equal to 95%, more preferably greater than or equal to 98%. The transparent conductive oxide layers comprises at least one material selected from the group consisting of tin doped indium oxide (ITO), fluorine doped tin oxide (FTO), antimony doped tin oxide (ATO), aluminum doped zinc oxide (AZO), indium doped zinc oxide (IZO), and gallium doped zinc oxide (GZO). In order to enable the thermal-insulation layer 4 to withstand a heat bending process of at least 550°C for automobile glass processing and adjust optical and mechanical properties of the thermal-insulation layer 4, the thermal-insulation layer 4 further comprises other dielectric layers, such as ZnSnOx, ZnO, SiNx, TiOx, SiOx, ZrOx, NiCr, and the like.

The outer glass pane 1 and/or the inner glass pane 2 are ultra-transparent glass (also referred to as ultra-white glass), in which the total iron content is less than or equal to 0.015% by mass, and the visible light transmittance is greater than or equal to 91%.Preferably, the total iron content of the ultra-transparent glass is less than or equal to 0.01%, less than or equal to 0.005%, less than or equal to 0.001%, and even the outer glass pane 1 and the inner glass pane 2 may be substantially free of iron oxide (Fe₂O₃). Exemplarily, the outer glass pane 211 and the inner glass pane 212 may be soda-lime-silicon ultra-transparent glass, borosilicate glass, high-alumina glass, or the like.

After the infrared anti-reflective layer is deposited on the surface of the ultra-transparent glass through a magnetron sputtering process, the monolithic visible light transmittance (TL10) of the ultra-transparent glass provided with the infrared anti-reflective layer is greater than or equal to 90%, and the first near-infrared transmittance (Tpl) to P-polarized light with a wavelength of 905 nm incident at an incident angle of 50°-73° of the ultra-transparent glass provided with the infrared anti-reflective layer is greater than or equal to 85%. Preferably, the first near-infrared transmittance (Tp1) to P-polarized light with a wavelength of 905 nm incident at an incident angle of 55°-70° of the ultra-transparent glass provided with the infrared anti-reflective layer is greater than the monolithic visible light transmittance (TL10) thereof. Preferably, the first near-infrared transmittance (Tp1) to P-polarized light with a wavelength of 905 nm incident at an incident angle of 50°-73°of the ultra-transparent glass provided with the infrared anti-reflective layer has a maximum value (Tp1max) and a minimum value (Tp1min), and the difference between the maximum value (Tp1max) and the minimum value (Tp1min) is less than 10%.

The thermoplastic intermediate layer 3 is sandwiched between the outer glass pane 1 and the inner glass pane 2, and is used to bond the outer glass pane 1 and the inner glass pane 2 together to form a laminated glass structure. The material thereof may be selected from, for example, polyvinyl butyral (PVB), ethylene vinyl acetate (EVA), polyethylene terephthalate (PET), polyurethane (PU), ionic polymer film (SGP), and the like. The thermoplastic intermediate layer may have a single-layer structure, or may comprise at least two layers, for example, one of the layers has a higher plasticizer content to have a sound insulation function, or one of the layers has a wedge shape to have a head-up display (HUD) function.

In order to meet the national standard requirement that the visible light transmittance of automobile glass is greater than or equal to 70% and prevent the inside of the automobile from generating reflection, it is preferable that the laminated thermal-insulation glass has a first visible light transmittance (TL1) greater than or equal to 85%, a second visible light transmittance (TL2) greater than or equal to 70%, and a fourth surface visible light reflectance (RL4) less than or equal to 10%, more preferably less than or equal to 9%, and even less than or equal to 8%.

In order to make the laminated thermal-insulation glass have excellent thermal-insulation performance and greatly improve the thermal comfort in the vehicle, it is preferable that the total solar transmittance (Tts) of the laminated thermal-insulation glass is less than or equal to 50%, more preferably less than or equal to 40%.

In order to meet the requirements for the use of a sensor such as LIDAR with a P-polarized light having a wavelength of 905 nm, and to ensure the accuracy and efficiency of the large field-of-view detection of the sensor, it is preferred that the second near-infrared transmittance (Tp2) to P-polarized light with a wavelength of 905 nm incident at an incident angle of 50°-73°of the laminated thermal-insulation glass is greater than or equal to 80%, and the second near-infrared transmittance Tp2 to P-polarized light with a wavelength of 905 nm incident at an incident angle of 55°-65°of the laminated thermal-insulation glass is greater than or equal to 90%.

In order to make the laminated thermal-insulation glass have a good appearance color, it is preferable that the first surface reflection color Lab of the laminated thermal-insulation glass has an *a* value of -5 to 2 and a b value of -12 to 0.

The present invention further provides a vehicle, comprising a sensor and the laminated thermal-insulation glass. Exemplarily, the laminated thermal-insulation glass may be used as a front windshield or the like. The sensor is mounted inside the vehicle, and the detection signal having a wavelength of 905 nm emitted and/or received by the sensor passes through the film-free region. Preferably, the detection signal is incident on the film-free region at an incident angle of 50°-73°, and the detection signal comprises at least 80% of P-polarized light.

The laminated thermal-insulation glass according to the present invention may enable the automobile glass to meet the communication requirements of a high-sensitivity communication sensor such as a LIDAR or an infrared camera, and also enable the total solar transmittance of the laminated thermal-insulation glass not to exceed 50%. The visible light reflectivity of the fourth surface is low, such that the influence of glare in the automobile on the driver is further reduced, when the glass is used as an automobile glass. Meanwhile, the use requirement that the attenuation of the signal of the LIDAR or the infrared camera through the laminated thermal-insulation glass is not higher than 3dB is met, which ensures the normal work of the LIDAR or the infrared camera. While the use accuracy of the LIDAR or the infrared camera is improved, the energy consumption of the air conditioner can be obviously reduced, and the comfort of drivers and passengers can be improved. In addition, the laminated thermal-insulation glass is formed by adopting a whole-surface coating process and a localized film removing process in the thermal-insulation layer, which is simple, and good in the overall appearance consistency of the film layer

The present invention will be described in more detail below with reference to specific embodiments. The following several different film layer structures were selected for comparative tests. It should be understood by those skilled in the art that the embodiments specifically described below are illustrative rather than restrictive and should not be used to limit the protection scope of the present invention.

### Comparative Examples 1-5 and Examples 1-3

### Comparative Example 1

A piece of ultra-transparent glass having a thickness of 2.1 mm was prepared without any film layer deposited on its surface.

### Comparative Example 2

A piece of ultra-transparent glass having a thickness of 2.1 mm was prepared and entered into the magnetron sputtering coating line after cleaning, drying and other processes. An infrared anti-reflective layer was deposited on any surface of the ultra-transparent glass. The infrared anti-reflective layer had the following four-layered structure sequentially deposited on the glass surface: a high refractive index TiOx layer having a thickness of 20 nm, a low refractive index SiOx layer having a thickness of 50 nm, a high refractive index TiOx layer having a thickness of 25 nm and a low refractive index SiOx layer having a thickness of 73 nm.

### Comparative Example 3

A piece of ultra-transparent glass having a thickness of 2.1 mm was prepared and entered into the magnetron sputtering coating line after cleaning, drying and other processes. An infrared anti-reflective layer was deposited on any surface of the ultra-transparent glass. The infrared anti-reflective layer had the following six-layered structure sequentially deposited on the glass surface: a high refractive index TiOx layer having a thickness of 15 nm, a low refractive index SiOx layer having a thickness of 60 nm, a high refractive index TiOx layer having a thickness of 40 nm, a low refractive index SiOx layer having a thickness of 18 nm, a high refractive index TiOx layer having a thickness of 28 nm and a low refractive index SiOx layer having a thickness of 28 nm.

### Comparative Example 4

A piece of ultra-transparent glass having a thickness of 2.1 mm was prepared and entered into the magnetron sputtering coating line after cleaning, drying and other processes. An infrared anti-reflective layer was deposited on any surface of the ultra-transparent glass. The infrared anti-reflective layer had the following four-layered structure sequentially deposited on the glass surface: a high refractive index TiOx layer having a thickness of 100 nm, a low refractive index SiOx layer having a thickness of 65 nm, a high refractive index TiOx layer having a thickness of 120 nm and a low refractive index SiOx layer having a thickness of 75 nm.

### Comparative Example 5

A piece of ultra-transparent glass having a thickness of 2.1 mm was prepared and entered into the magnetron sputtering coating line after cleaning, drying and other processes. An infrared anti-reflective layer was deposited on any surface of the ultra-transparent glass. The infrared anti-reflective layer had the following four-layered structure sequentially deposited on the glass surface: a high refractive index TiOx layer having a thickness of 120 nm, a low refractive index SiOx layer having a thickness of 15 nm, a high refractive index TiOx layer having a thickness of 95 nm and a low refractive index SiOx layer having a thickness of 75 nm.

### Example 1

A piece of ultra-transparent glass having a thickness of 2.1 mm was prepared and entered into the magnetron sputtering coating line after cleaning, drying and other processes. An infrared anti-reflective layer was deposited on any surface of the ultra-transparent glass. The infrared anti-reflective layer had the following four-layered structure sequentially deposited on the glass surface: a high refractive index TiOx layer having a thickness of 150 nm, a low refractive index SiOx layer having a thickness of 23 nm, a high refractive index TiOx layer having a thickness of 120 nm and a low refractive index SiOx layer having a thickness of 75 nm.

### Example 2

A piece of ultra-transparent glass having a thickness of 2.1 mm was prepared and entered into the magnetron sputtering coating line after cleaning, drying and other processes. An infrared anti-reflective layer was deposited on any surface of the ultra-transparent glass. The infrared anti-reflective layer had the following four-layered structure sequentially deposited on the glass surface: a high refractive index TiOx layer having a thickness of 120 nm, a low refractive index SiOx layer having a thickness of 15 nm, a high refractive index TiOx layer having a thickness of 140 nm and a low refractive index SiOx layer having a thickness of 65 nm.

### Example 3

A piece of ultra-transparent glass having a thickness of 2.1 mm was prepared and entered into the magnetron sputtering coating line after cleaning, drying and other processes. An infrared anti-reflective layer was deposited on any surface of the ultra-transparent glass. The infrared anti-reflective layer had the following four-layered structure sequentially deposited on the glass surface: a high refractive index TiOx layer having a thickness of 130 nm, a low refractive index SiOx layer having a thickness of 30 nm, a high refractive index TiOx layer having a thickness of 130 nm and a low refractive index SiOx layer having a thickness of 75 nm.

### Performance Testing

Optical performance tests were performed on the ultra-transparent glass of Comparative Example 1 and the ultra-transparent glass provided with the infrared anti-reflective layer of Comparative Examples 2 to 4, and the test results are shown in Table 1.

Monolithic visible light transmittance (TL10): The transmittance of visible light in the wavelength range of 380 nm to 780 nm was measured and calculated according to ISO 9050.

First near-infrared transmittance (Tp1): the transmittance to P-polarized light with a wavelength of 905 nm incident at different incident angles of the ultra-transparent glass provided with the infrared anti-reflective layer was measured and calculated according to ISO 9050, and the transmittance at incident angles of 50°, 55°, 60°, 65°, 70° and 73° are recorded respectively.

**Table 1. Test results of Comparative Examples 1-5 and Examples 1-3**

| | | Comparative Example 1 | Comparative Example 2 | Comparative Example 3 | Comparative Example 4 |
|---|---|---|---|---|---|
| infrared anti-reflective layer | | None | four-layered structure | six-layered structure | four-layered structure |
| (physical thickness of the first high-refractive index layer) - (physical thickness of the first low-refractive index layer) | | / | -30 nm | -45 nm | +35 nm |
| (physical thickness of the second high-refractive index layer) - (physical thickness of the second low-refractive index layer) | | / | -48 nm | +22 nm | +45 nm |
| monolithic visible light transmittance (TL10) | | 93.60% | 83.50% | 85.20% | 83.81% |
| first near-infrared transmittance (Tp1) | Tp1-50° | 97.45% | 93.60% | 93.90% | 88.91% |
| | Tp1-55-° | 97.82% | 94.04% | 95.72% | 92.45% |
| | Tp1-60° | 97.98% | 96.69% | 97.63% | 95.12% |
| | Tp1-65° | 95.87% | 96.83% | 96.98% | 95.98% |
| | Tp1-70° | 90.28% | 93.82% | 93.20% | 93.16% |
| | Tp1-73° | 83.52% | 88.71% | 87.70% | 88.63% |

Optical performance tests were performed on the ultra-transparent glass provided with the infrared anti-reflective layer of Comparative Examples 5 and Examples 1-3, and the test results are shown in Table 2.

**Table 2. Test results of Comparative Example 5 and Examples 1-3**

| | | Comparative Example 5 | Example 1 | Example 2 | Example 3 |
|---|---|---|---|---|---|
| infrared anti-reflective layer | | four-layered structure | four-layered structure | four-layered structure | four-layered structure |
| (physical thickness of the first high-refractive index layer) - (physical thickness of the first low-refractive index layer) | | 105 nm | 127 nm | 105 nm | 100 nm |
| (physical thickness of the second high-refractive index layer) - (physical thickness of the second low-refractive index layer) | | 20 nm | 45 nm | 75 nm | 55 nm |
| Monolithic visible light transmittance (TL10) | | 90.82% | 93.50% | 91.68% | 91.12% |
| First near-infrared transmittance (Tp1) | Tp1-50° | 95.27% | 91.92% | 93.17% | 94.45% |
| | Tp1-55° | 96.94% | 94.42% | 95.56% | 96.52% |
| | Tp1-60° | 97.44% | 96.05% | 96.75% | 97.50% |
| | Tp1-65° | 95.73% | 96.59% | 96.45% | 96.36% |
| | Tp1-70° | 90.54% | 93.52% | 92.64% | 92.65% |
| | Tp1-73° | 84.86% | 88.16% | 88.28% | 87.88% |

It can be seen from Table 1 and Table 2 that, in Comparative Example 1 in which a monolithic ultra-transparent glass without an infrared anti-reflective layer is used, the visible light transmittance is greater than 91%, but the transmittance to P-polarized light with a wavelength of 905 nm incident at an incident angle of 50°-73° drops sharply from 95% or more to 85% or less. In particular, the first near-infrared transmittance (Tp1) to P-polarized light with a wavelength of 905 nm incident at an incident angle of 70° in Comparative Example 1 is less than the monolithic visible light transmittance (TL10). The first near-infrared transmittance (Tp1) to P-polarized light with a wavelength of 905 nm incident at an incident angle of 50°-73° in Comparative Example 1 has a maximum value (Tp1max) and a minimum value (Tp1min), and the difference between the maximum value (Tp1max) and the minimum value (Tp1min) is greater than 10%.

Both Comparative Example 2 and Comparative Example 4 involve ultra-transparent glass provided with an infrared anti-reflective layer of a four-layer structure, and the transmittance to P-polarized light with a wavelength of 905 nm incident at an incident angle of 50°-73° is kept at 85% or more, but the visible light transmittance thereof drops sharply to 90% or less, or even to 85% or less.

Comparative Example 3 involves an ultra-transparent glass provided with an infrared anti-reflective layer of a six-layer structure, and the transmittance to P-polarized light with a wavelength of 905 nm incident at an incident angle of 50°-73° is kept at 85% or more, but the visible light transmittance thereof drops sharply to 90% or less. Moreover, the infrared anti-reflective layer of the six-layer structure is more complex in manufacturing process and higher in manufacturing cost than the infrared anti-reflective layer of the four-layer structure.

Comparative Example 5 involves an ultra-transparent glass provided with an infrared anti-reflective layer of a four-layer structure, and has a visible light transmittance of greater than 90%, but the transmittance to P-polarized light with a wavelength of 905 nm incident at an incident angle of 50°-73° drops sharply from 95% or more to 85% or less. In particular, the first near-infrared transmittance (Tp1) to P-polarized light with a wavelength of 905 nm incident at an incident angle of 70° in Comparative Example 5 is less than the monolithic visible light transmittance (TL10). The first near-infrared transmittance (Tp1) to P-polarized light with a wavelength of 905 nm incident at an incident angle of 50°-73° in Comparative Example 5 has a maximum value (Tp1max) and a minimum value (Tp1min), and the difference between the maximum value (Tp1max) and the minimum value (Tp1min) is greater than 10%.

Compared with Comparative Examples 1-5, the ultra-transparent glass provided with an infrared anti-reflective layer of a four-layer structure provided in Examples 1-3 has a monolithic visible light transmittance (TL10) of greater than 90%, and a first near-infrared transmittance (Tp1) to P-polarized light with a wavelength of 905 nm incident at an incident angle of 50°-73° of greater than 85%. Meanwhile, for the ultra-transparent glass provided with the infrared anti-reflective layer of the four-layer structure provided in Examples 1-3, the first near-infrared transmittance (Tp1) to P-polarized light with a wavelength of 905 nm incident at an incident angle of 55°-70° is greater than the visible light transmittance (TL10) thereof. Specifically, for the ultra-transparent glass provided with the infrared anti-reflective layer of the four-layer structure provided in Examples 1-3, the difference between the first near-infrared transmittance (Tp1) to P-polarized light with a wavelength of 905 nm incident at an incident angle of 60° and the visible light transmittance (TL10) thereof is 2.55%-6.38%, that is, 2.55% ≤ (Tp1-60°)-TL10 ≤ 6.38%. For the ultra-transparent glass provided with the infrared anti-reflective layer of the four-layer structure provided in Examples 1-3, the first near-infrared transmittance (Tp1) to P-polarized light with a wavelength of 905 nm incident at an incident angle of 50°-73° has a maximum value (Tp1max) and a minimum value (Tp1min), and the difference between the maximum value (Tp1max) and the minimum value (Tp1min) is less than 10%, that is, Tp1max-Tp1min is less than 10%, so as to ensure that the first near-infrared transmittance (Tp1) to P-polarized light with a wavelength of 905 nm incident at different incident angles fluctuates in a less manner, improving the stability and quality of point cloud data obtained when matched with a LIDAR. Specifically, for the ultra-transparent glass provided with the infrared anti-reflective layer of the four-layer structure provided in Examples 1-3, the first near-infrared transmittance (Tp1) to P-polarized light with a wavelength of 905 nm incident at an incident angle of 55°-70° has a maximum value (Tp1max) and a minimum value (Tp1min), and the difference between the maximum value (Tp1max) and the minimum value (Tp1min) is 3.07%-4.85%, that is, 3.07% ≤ Tp1max-Tp1min ≤ 4.85%.

### Comparative Examples 6-9 and Examples 4-9

### Comparative Example 6

A piece of ultra-transparent glass having a thickness of 2.1 mm was prepared and entered into the magnetron sputtering coating line after cleaning, drying and other processes. An infrared anti-reflective layer was deposited on any surface of the ultra-transparent glass, wherein the thermal-insulation layer included two silver film layers in which the following layers were sequentially deposited on the glass surface: a ZnSnOx layer having a thickness of 22 nm, an AZO layer having a thickness of 10 nm, an Ag layer having a thickness of 11 nm, a TiOx layer having a thickness of 5 nm, a ZnSnOx layer having a thickness of 55 nm, an AZO layer having a thickness of 15 nm, an Ag layer having a thickness of 12.5 nm, a TiOx layer having a thickness of 5 nm, a ZnSnOx layer having a thickness of 20 nm, and a SiNx layer having a thickness of 15 nm.

Laser film removal was performed on the ultra-transparent glass deposited with the thermal-insulation layer to form a film-free region with no thermal-insulation layer, and the detection signal transmitted and/or received by the sensor can pass through the film-free region.

A piece of ultra-transparent glass provided with an infrared anti-reflective layer in Comparative Example 2 was prepared. The ultra-transparent glass provided with a thermal-insulation layer and the ultra-transparent glass provided with the infrared anti-reflective layer were subjected to a heat bending process at a temperature of at least 550°C, respectively.

A piece of transparent PVB was prepared. The ultra-transparent glass provided with the thermal-insulation layer after heat bending was used as an outer glass pane, and the ultra-transparent glass provided with the infrared anti-reflective layer after heat bending was used as an inner glass pane. The thermal-insulation layer was located on the second surface of the outer glass pane, and the infrared anti-reflective layer was located on the fourth surface of the inner glass pane. The laminated thermal-insulation glass with high localized infrared transmittance in Comparative Example 6 was prepared according to the production process of automobile glass.

### Comparative Example 7

Comparative Example 7 was carried out in a same manner with Comparative Example 6, except that a piece of ultra-transparent glass provided with the infrared anti-reflective layer in Comparative Example 3 was prepared.

### Example 4

Example 4 was carried out in a same manner with Comparative Example 6, except that a piece of ultra-transparent glass provided with the infrared anti-reflective layer in Example 1 was prepared.

### Example 5

Example 4 was carried out in a same manner with Comparative Example 6, except that a piece of ultra-transparent glass provided with the infrared anti-reflective layer in Example 2 was prepared.

### Example 6

Example 4 was carried out in a same manner with Comparative Example 6, except that a piece of ultra-transparent glass provided with the infrared anti-reflective layer in Example 3 was prepared.

### Comparative Example 8

Comparative Example 8 was carried out in a same manner with Comparative Example 6, except that:
The thermal-insulation layer included three silver film layers in which the following layers were sequentially deposited on the glass surface: a ZnSnOx layer having a thickness of 25 nm, an AZO layer having a thickness of 10 nm, an Ag layer having a thickness of 13 nm, a TiOx layer having a thickness of 5 nm, a ZnSnOx layer having a thickness of 50 nm, an AZO layer having a thickness of 15 nm, an Ag layer having a thickness of 14.5 nm, a TiOx layer having a thickness of 5 nm, a ZnSnOx layer having a thickness of 48 nm, an AZO layer having a thickness of 15 nm, an Ag layer having a thickness of 12.5 nm, a TiOx layer having a thickness of 5 nm, a ZnSnOx layer having a thickness of 20 nm, and a SiNx layer having a thickness of 15 nm.

A piece of ultra-transparent glass provided with the infrared anti-reflective layer in Comparative Example 4 was prepared.

### Comparative Example 9

Comparative Example 10 was carried out in a same manner with Comparative Example 8, except that a piece of ultra-transparent glass provided with the infrared anti-reflective layer in Comparative Example 5 was prepared.

### Example 7

Example 7 was carried out in a same manner with Comparative Example 8, except that a piece of ultra-transparent glass provided with the infrared anti-reflective layer in Example 1 was prepared.

### Example 8

Example 8 was carried out in a same manner with Comparative Example 8, except that a piece of ultra-transparent glass provided with the infrared anti-reflective layer in Example 2 was prepared.

### Example 9

Example 9 was carried out in a same manner with Comparative Example 8, except that a piece of ultra-transparent glass provided with the infrared anti-reflective layer in Example 3 was prepared.

### Performance Testing

Optical performance tests were performed on the laminated thermal-insulation glass of Comparative Example 6-7 and Example 4-6, and the test results are shown in Table 3.

First visible light transmittance (TL1): the transmittance of visible light in the wavelength range of 380 nm to 780 nm for the film-free region of the laminated thermal-insulation glass was measured and calculated according to ISO 9050.

Second visible light transmittance (TL2): The transmittance of visible light in the wavelength range of 380 nm to 780 nm for the overlapping region of the laminated thermal-insulation glass was measured and calculated according to ISO 9050.

Total solar transmittance (Tts): the total solar transmittance in the wavelength range of 300 nm to 2500 nm for the overlapping region of the laminated thermal-insulation glass was measured and calculated according to ISO 9050.

Fourth surface visible light reflectance (RL4): the reflectance to visible light in the wavelength range of 380 nm to 780 nm incident from the fourth surface side for the overlapping region of the laminated thermal-insulation glass was measured and calculated according to ISO 9050.

Second near-infrared transmittance (Tp2): the transmittance to P-polarized light with a wavelength of 905 nm incident at different incident angles for the film-free region of the laminated thermal-insulation glass was measured and calculated according to ISO 9050, and the transmittance with incident angles of 50°, 55°, 60°, 65°, 70° and 73° are recorded respectively.

First surface reflection color Lab: it is measured from one side of the first surface, and is calculated according to a CIE Lab color model based on a D65 light source and a 10° field angle at an incident angle of 65°, where *a* value represents a red-green value, and *b* value represents a yellow-blue value.

**Table 3. Test results of Comparative Examples 6-7 and Examples 4-6**

| | | Comparative Example 6 | Comparative Example 7 | Example 4 | Example 5 | Example 6 |
|---|---|---|---|---|---|---|
| infrared anti-reflective | | Comparative | Comparative | Example | Example | Example |
| layer | | Example 2 | Example 3 | 1 | 2 | 3 |
| thermal-insulation layer | | two silver film layers | two silver film layers | two silver film layers | two silver film layers | two silver film layers |
| First visible light transmittance (TL1) | | 80.1% | 78.4% | 86.5% | 86.3% | 86.3% |
| Second visible light transmittance (TL2) | | 68.9% | 70.5% | 77.2% | 76.4% | 76.7% |
| Total solar transmittance (Tts) | | 48.1% | 48.2% | 48.3% | 48.5% | 48.5% |
| Fourth surface visible light reflectance (RL4) | | 13.8% | 14.2% | 7.2% | 6.9% | 7.1% |
| Second near-infrared transmittance (Tp2) | Tp2-50° | 89.25% | 90.87% | 88.65% | 90.12% | 88.62% |
| | Tp2-55° | 91.31% | 92.56% | 91.30% | 92.33% | 91.32% |
| | Tp2-60° | 92.80% | 93.58% | 93.13% | 93.62% | 93.14% |
| | Tp2-65° | 92.86% | 93.03% | 93.02% | 93.07% | 93.01% |
| | Tp2-70° | 89.83% | 89.28% | 89.46% | 89.12% | 89.35% |
| | Tp2-73° | 85.48% | 84.54% | 84.69% | 83.94% | 84.48% |
| First surface reflection color Lab | *L* | 38.8 | 40.5 | 38.2 | 39.5 | 39.1 |
| | *a* | -3.3 | -4.2 | -2.6 | -1.5 | 0.25 |
| | *b* | -10.6 | -9.6 | -10.6 | -11.6 | -9.8 |

Performance tests were performed on the ultra-transparent glass provided with the infrared anti-reflective layer of Comparative Examples 8-9 and Examples 7-9, and the test results are shown in Table 4.

**Table 4. Test results of Comparative Examples 8-9 and Examples 7-9**

| | | Comparative Example 8 | Comparative Example 9 | Example 7 | Example 8 | Example 9 |
|---|---|---|---|---|---|---|
| infrared anti-reflective layer | | Comparative Example 4 | Comparative Example 5 | Example 1 | Example 2 | Example 3 |
| thermal-insulation layer | | three silver film layers | three silver film layers | three silver film layers | three silver film layers | three silver film layers |
| First visible light transmittance (TL1) | | 79.0% | 86.2% | 86.5% | 86.3% | 86.3% |
| Second visible light transmittance (TL2) | | 66.2% | 71.1% | 71.2% | 71.1% | 71.2% |
| Total solar transmittance (Tts) | | 38.58% | 39.10% | 39.20% | 39.10% | 39.20% |
| Fourth surface visible light reflectance (RL4) | | 13.9% | 11.2% | 6.2% | 5.9% | 6.1% |
| Second near-infrared transmittance (Tp2) | Tp2-50° | 86.81% | 94.21% | 88.65% | 90.12% | 88.62% |
| | Tp2-55° | 89.95% | 94.84% | 91.30% | 92.33% | 91.32% |
| | Tp2-60° | 92.32% | 94.14% | 93.13% | 93.62% | 93.14% |
| | Tp2-65° | 92.83% | 92.13% | 93.02% | 93.07% | 93.01% |
| | Tp2-70° | 89.75% | 86.44% | 89.46% | 89.12% | 89.35% |
| | Tp2-73° | 85.53% | 80.06% | 84.69% | 83.94% | 84.48% |
| First surface reflection color Lab | L | 40.2 | 38.8 | 37.2 | 38.2 | 38.8 |
| | a | -9.8 | 12.2 | -3.6 | 1.2 | 0.58 |
| | b | 7.8 | 2.1 | -5.3 | -4.3 | -4.2 |

It can be seen from Table 3 and Table 4 that, in Comparative Example 6 in which the ultra-transparent glass provided with the infrared anti-reflective layer in Comparative Example 2 is used as the inner glass pane, the second visible light transmittance (TL2) is less than 70%, and the fourth surface visible light reflectance (RL4) is greater than 10%, which cannot meet the national standard requirement that the visible light transmittance of the automobile glass is greater than or equal to 70%, and also has the problem that the visible light reflectance in the automobile is too high to cause reflection, degrading the driving safety.

In Comparative Example 7 in which the ultra-transparent glass provided with the infrared anti-reflective layer in Comparative Example 3 is used as the inner glass pane, the fourth surface visible light reflectance (RL4) is greater than 10%, and has the problem that the visible light reflectance in the automobile is too high to cause reflection, degrading the driving safety.

In Comparative Example 8 in which the ultra-transparent glass provided with the infrared anti-reflective layer in Comparative Example 4 is used as the inner glass pane, the second visible light transmittance (TL2) is less than 70%, and the fourth surface visible light reflectance (RL4) is greater than 10%, which cannot meet the national standard requirement that the visible light transmittance of the automobile glass is greater than or equal to 70%, and also has the problem that the visible light reflectance in the automobile is too high to cause reflection, degrading the driving safety. Moreover, in Comparative Example 8, the *b* value in the first surface reflection color Lab is greater than 2, such that the laminated thermal-insulation glass of Comparative Example 8 has a yellowish color when observed from outside the vehicle, which cannot meet the requirement of good appearance color.

In Comparative Example 9 in which the ultra-transparent glass provided with the infrared anti-reflective layer in Comparative Example 5 is used as the inner glass pane, the fourth surface visible light reflectance (RL4) is greater than 10%, which has the problem that the visible light reflectance in the automobile is too high to cause reflection, degrading the driving safety. Moreover, in Comparative Example 9, the *a* value in the first surface reflection color Lab is greater than 2 (even greater than 10), the b value is greater than 2, such that the laminated thermal-insulation glass of Comparative Example 9 has a seriously reddish or yellowish color when observed from outside the vehicle, which cannot meet the requirement of good appearance color.

Compared with Comparative Examples 6-9, the laminated thermal-insulation glass provided in the Examples 4-9 can achieve a first visible light transmittance (TL1) of greater than or equal to 85%, a second visible light transmittance (TL2) of greater than or equal to 70%, and a fourth surface visible light reflectance (RL4) of less than or equal to 10%, which not only meets the national standard requirement that the visible light transmittance of the automobile glass is greater than or equal to 70%, but also ensures that no reflection occurs inside the automobile. The laminated thermal-insulation glass provided in Examples 4-9 can also achieve a total solar transmittance (Tts) of less than or equal to 50%, even less than or equal to 40%, which has excellent thermal-insulation performance and greatly improves thermal comfort in the vehicle. The laminated thermal-insulation glass provided in Examples 4-9 can also achieve a second near-infrared transmittance (Tp2) to P-polarized light with a wavelength of 905 nm incident at an incident angle of 50°-73° of greater than or equal to 80%, and even a second near-infrared transmittance (Tp2) to P-polarized light with a wavelength of 905 nm incident at an incident angle of 55°-65° of greater than or equal to 90%, which meets the use requirements of a sensor such as LIDAR having P-polarized light with a wavelength of 905 nm, and ensures the accuracy and efficiency of large-view-field angle detection of the sensor. Specifically, the second near-infrared transmittance (Tp2) to the P-polarized light with a wavelength of 905 nm incident at an incident angle of 55°-70° of the laminated thermal-insulation glass provided in Examples 4-9 has a maximum value (Tp2max) and a minimum value (Tp2min), and the difference between the maximum value (Tp2max) and the minimum value (Tp2min) is 3.67%-4.50%, that is, 3.67% ≤ (Tp2max-Tp2min) ≤ 4.50%. Specifically, the difference between the second near-infrared transmittance (Tp2) to P-polarized light with the wavelength of 905 nm incident at the incident angle of 60° and the first visible light transmittance (TL1) of the laminated thermal-insulation glass provided in Examples 4-9 is 6.63%-7.32%, that is, 6.63% ≤ (Tp2-60°)-TL1 ≤ 7.32%.

The laminated thermal-insulation glass provided in Examples 4-9 can also achieve an *a* value of -5 to 2 and a b value of -12 to 0 in the first surface reflection color Lab, resulting in a good appearance color.

Obviously, the above embodiments of the present invention are merely examples for clearly illustrating the present invention, and are not intended to limit the embodiments of the present invention. For those skilled in the art, other different forms of changes or variations may be made on the basis of the above description, and the embodiments cannot be exhaustive herein. Thus any obvious changes or variations that fall into the technical solutions of the present invention still fall within the protection scope of the present invention.

## Claims

1. A laminated thermal-insulation glass with high localized infrared transmittance, comprising an outer glass pane, an inner glass pane, and a thermoplastic intermediate layer;
wherein the outer glass pane has a first surface and a second surface;
the inner glass pane has a third surface and a fourth surface; and
the thermoplastic intermediate layer is sandwiched between the second surface and the third surface;
wherein the laminated thermal-insulation glass further comprises an infrared anti-reflective layer and a thermal-insulation layer which are not positioned on the same glass surface;
the orthographic projection of the infrared anti-reflective layer on the first surface and the orthographic projection of the thermal-insulation layer on the first surface have an overlapping region;
a film-free region is provided in the thermal-insulation layer; and
the orthographic projection of the infrared anti-reflective layer on the thermal-insulation layer covers the film-free region.

2. The laminated thermal-insulation glass according to claim 1, wherein the orthographic projection of the infrared anti-reflective layer on the first surface occupies 70% or more of the area of the first surface;
the orthographic projection of the thermal-insulation layer on the first surface occupies 70% or more of the area of the first surface; and
the overlapping region occupies 80% or more of the orthographic projection of the thermal-insulation layer on the first surface.

3. The laminated thermal-insulation glass according to claim 1, wherein the infrared anti-reflective layer comprises a first high-refractive index layer, a first low-refractive index layer, a second high-refractive index layer and a second low-refractive index layer which are sequentially laminated from the glass surface;
the physical thickness of the first high-refractive index layer is greater than the physical thickness of the first low-refractive index layer, and
the physical thickness of the second high-refractive index layer is greater than the physical thickness of the second low-refractive index layer.

4. The laminated thermal-insulation glass according to claim 3, wherein the first high-refractive index layer has a refractive index of 1.8-2.7, and a physical thickness of 110 nm-160 nm;
the first low-refractive index layer has a refractive index of 1.3-1.7, and a physical thickness of 5 nm-50 nm;
the second high-refractive index layer has a refractive index of 1.8-2.7, and a physical thickness of 100 nm-160 nm; and
the second low-refractive index layer has a refractive index of 1.3-1.7, and a physical thickness of 55 nm-110 nm.

5. The laminated thermal-insulation glass according to claim 3, wherein a difference between the physical thickness of the first high-refractive index layer and the physical thickness of the first low-refractive index layer is greater than or equal to 50 nm, and
a difference between the physical thickness of the second high-refractive index layer and the physical thickness of the second low-refractive index layer is greater than or equal to 30 nm.

6. The laminated thermal-insulation glass according to claim 3, wherein a difference between the physical thickness of the first high-refractive index layer and the physical thickness of the first low-refractive index layer is greater than or equal to 100 nm, and
a difference between the physical thickness of the second high-refractive index layer and the physical thickness of the second low-refractive index layer is greater than or equal to 40 nm.

7. The laminated thermal-insulation glass according to claim 3, wherein each of the first high-refractive index layer and the second high-refractive index layer comprises a material selected from oxides, nitrides or oxynitrides of at least one element of Zn, Sn, Ti, Nb, Zr, Ni, In, Al, Ce, W, Mo, Sb, Bi, Si, Hf, Ta, Y, Ce and La; and
each of the first low-refractive index layer and the second low-refractive index layer comprises a material selected from oxides, oxynitrides or fluorides of at least one element of Si, Al, Mg, Ce, La, Y and Ba.

8. The laminated thermal-insulation glass according to claim 1, wherein the thermal-insulation layer comprises at least two metallic silver layers, silver alloy layers or transparent conductive oxide layers;
wherein the silver alloy layer comprises at least one material selected from the group consisting of silver-copper alloy, silver-aluminum alloy, silver-indium alloy, silver-gold alloy, silver-platinum alloy, silver-nickel alloy, silver-chromium alloy, silver-tin alloy, silver-titanium alloy, silver-zirconium alloy, silver-molybdenum alloy, silver-tungsten alloy, silver-manganese alloy, and silver-magnesium alloy; and
the transparent conductive oxide layer comprises at least one material selected from the group consisting of tin-doped indium oxide, fluorine-doped tin oxide, antimony-doped tin oxide, aluminum-doped zinc oxide, indium-doped zinc oxide and gallium-doped zinc oxide.

9. The laminated thermal-insulation glass according to claim 1, wherein the outer glass pane and/or the inner glass pane is an ultra-transparent glass having a total iron content of less than or equal to 0.015% by mass, and a visible light transmittance of greater than or equal to 91%.

10. The laminated thermal-insulation glass according to claim 9, wherein the ultra-transparent glass provided with the infrared anti-reflective layer has a monolithic visible light transmittance (TL10) of greater than or equal to 90%, and a first near-infrared transmittance (Tp1) of greater than or equal to 85% to P-polarized light with a wavelength of 905 nm incident at an incident angle of 50°-73°.

11. The laminated thermal-insulation glass according to claim 10, wherein the ultra-transparent glass provided with the infrared anti-reflective layer has a first near-infrared transmittance (Tp1) to P-polarized light with a wavelength of 905 nm incident at an incident angle of 55°-70° greater than the monolithic visible light transmittance (TL10) thereof.

12. The laminated thermal-insulation glass according to claim 10, wherein the first near-infrared transmittance (Tp1) to P-polarized light with a wavelength of 905 nm incident at an incident angle of 50°-73° of the ultra-transparent glass provided with the infrared anti-reflective layer has a maximum value (Tp1max) and a minimum value (Tp1min), and a difference between the maximum value (Tp1max) and the minimum value (Tp1min) is less than 10%.

13. The laminated thermal-insulation glass according to claim 1, wherein the laminated thermal-insulation glass has a first visible light transmittance (TL1) of greater than or equal to 85%, a second visible light transmittance (TL2) of greater than or equal to 70%, and a fourth surface visible light reflectance (RL4) of less than or equal to 10%.

14. The laminated thermal-insulation glass according to claim 1, wherein the laminated thermal-insulation glass has a total solar transmittance (Tts) of less than or equal to 50%.

15. The laminated thermal-insulation glass according to claim 1, wherein the laminated thermal-insulation glass has a second near-infrared transmittance (Tp2) of greater than or equal to 80% to P-polarized light with a wavelength of 905 nm incident at an incident angle of 50°-73°, and a second near-infrared transmittance (Tp2) of greater than or equal to 90% to P-polarized light with a wavelength of 905 nm incident at an incident angle of 55°-65°.

16. The laminated thermal-insulation glass according to claim 1, wherein the first surface reflection color Lab of the laminated thermal-insulation glass has an *a* value of -5 to 2 and a b value of -12 to 0.

17. The laminated thermal-insulation glass according to claim 10, wherein the difference between the first near-infrared transmittance (Tp1) to P-polarized light with a wavelength of 905 nm incident at an incident angle of 60° and the visible light transmittance (TL10) of the ultra-transparent glass provided with the infrared anti-reflective layer is 2.55%-6.38%.

18. The laminated thermal-insulation glass according to claim 10, wherein the first near-infrared transmittance (Tp1) to P-polarized light with a wavelength of 905 nm incident at an incident angle of 55°-70° of the ultra-transparent glass provided with the infrared anti-reflective layer has a maximum value (Tp1max) and a minimum value (Tp1min), and a difference between the maximum value (Tp1max) and the minimum value (Tplmin) is 3.07%-4.85%.

19. The laminated thermal-insulation glass according to claim 15, wherein the second near-infrared transmittance (Tp2) to P-polarized light with a wavelength of 905 nm incident at an incident angle of 55°-70° of the laminated thermal-insulation glass has a maximum value (Tp2max) and a minimum value (Tp2min), and a difference between the maximum value (Tp2max) and the minimum value (Tp2min) is 3.67%-4.50%.

20. The laminated thermal-insulation glass according to claim 15, wherein the difference between the second near-infrared transmittance (Tp2) to P-polarized light with a wavelength of 905 nm incident at an incident angle of 60° of the laminated thermal-insulation glass and the first visible light transmittance (TL1) of the laminated thermal-insulation glass is 6.63%-7.32%.

21. A vehicle, comprising a sensor and the laminated thermal-insulation glass according to any one of claims 1-20, wherein the sensor is mounted inside the vehicle, a detection signal having a wavelength of 905 nm emitted and/or received by the sensor passes through the film-free region.

22. The vehicle according to claim 21, wherein the detection signal is incident on the film-free region at an incident angle of 50°-73°, and the detection signal comprises at least 80% of P-polarized light.
